# EUROPEAN PATENT SPECIFICATION

(11) **EP 3 447 433 B1**
(45) Date of publication and mention of the grant of the patent: **13.05.2020**
(21) Application number: 17187667.5
(22) Date of filing: 24.08.2017
(51) Int. Cl.: F28F 9/18

(54) **HEAT EXCHANGER AS WELL AS METHOD FOR PRODUCING A HEAT EXCHANGER**
WÄRMETAUSCHER SOWIE VERFAHREN ZUR ERZEUGUNG EINES WÄRMETAUSCHERS
ÉCHANGEUR DE CHALEUR ET PROCÉDÉ DE FABRICATION D'UN ÉCHANGEUR DE CHALEUR

(43) Date of publication of application: 27.02.2019
(73) Proprietor: Mahle International GmbH, 70376 Stuttgart (DE)
(72) Inventor: BERGER, Thierry, 63-430 Tarchaly Wielkie (PL); DAMOTTE, Herve, 54400 Longwy (FR); MERCIER, Jean, 57330 Hettange (FR); NAUTET, Vincent, 1457 Luxembourg (LU); ZARADZKI, Konrad, 8295 Keispelt (LU)
(74) Representative: BRP Renaud & Partner mbB Rechtsanwälte Patentanwälte Steuerberater

(56) References cited:
- EP-A1- 0 128 806
- US-A1- 2005 247 442

## Description

The present invention relates to a heat exchanger comprising a first component and a second component, wherein the first component and the second component each have an edge zone and wherein the first and the second component abut against one another in an overlapping manner at their edge zones. The invention further relates to a method for producing a heat exchanger. The present invention relates, in particular, to a heat exchanger as defined in the preamble of claim 1 and as illustrated in US 2005/0247442A1.

Heat exchangers are used, for example, in motor vehicles and generally comprise inter alia as a first component a heat exchanger block which is substantially formed by tubes, fins or lamellae as well as end plates, and as a second component, a collecting and/or distributor box or a deflecting box. Usually the heat exchanger block and the collecting and/or distributor box or deflecting box are mechanically connected to one another by means of a clamping connection or flange connection and a rubber seal can be provided for sealing between heat exchanger block and collecting and/or distributor box or deflecting box. Typically the heat exchanger block consists of a metal material such as, for example, an aluminium material and the collecting and/or distributor box or deflecting box consists of plastic.

Known from DE 10 2012 202 886 is a heat exchanger in which a heat exchanger block with its end plate as a first component is mechanically connected to a collecting box as a second component. The end plate here has an upright edge zone which embraces a flange of the collecting box. The edge of the edge zone is bent over the flange of the collecting box together with subregions of the edge zone adjoining the edge so that a clamping and flange connection is formed.

Known from GB 2 138 335 is a heat exchanger in which a heat exchanger block as first component is mechanically connected to a collecting box as second component. The heat exchanger block here has an upright edge zone which comprises a plurality of uniformly arranged recesses spaced apart from the edge of the edge zone and which embraces a flange of the collecting box. The edge of the edge zone is in each case bent or pressed over the flange of the collecting box in some regions together with the subregions of the edge zone adjoining the edge so that a clamping or flange connection is formed.

EP 0 128 806 discloses a heat exchanger in which a heat exchanger block as a first component is mechanically connected to a collecting box as a second component. The heat exchanger block here has an upright edge zone comprising a plurality of projections or lugs arranged uniformly on the edge of the edge zone and projecting from the edge, and which embraces a flange of the collecting box. The projections or lugs projecting from the edge of the edge zone are bent or pressed over the flange of the collecting box so that a clamping or flange connection is formed.

Known from US 4 649 628 is a heat exchanger in which a heat exchanger block as first component is mechanically connected to a collecting box as second component. The heat exchanger block here has an upright edge zone which comprises a plurality of recesses arranged uniformly and spaced apart from the edge zone, and which embraces a flange of the collecting box. The edge of the edge zone is bent over the flange of the collecting box together with subregions of the edge zone adjoining the edge so that a clamping and flange connection is formed.

In these known heat exchangers however, the space requirement in the installation space provided in the motor vehicle is very large since these known heat exchangers have large dimensions not least because of the clamping or flange connection. As a result of the continually increasing number of units in motor vehicles, the space available for a heat exchangers is however further limited whilst at the same time a high heat exchanger capacity is required which in turn necessitates large heat exchangers. As a result of the usual construction of a heat exchanger with a clamping or flange connection however, the compactness of the known heat exchanger is limited. In addition, the clamping or flange connection in the known heat exchangers is not robust and the material consumption is high.

Known from US 7 469 741 is a heat exchanger made of a non-metallic material in which the individual components are joined to one another by welding by means of a laser beam. The heat exchanger block as well as the collecting and/or distributor box or deflecting box which consist of the same non-metallic material are joined to one another by welding by means of a laser beam. A clamping or flange connection is not necessary here.

If the collecting and/or distributor boxes or deflecting box as well as the heat exchanger block are formed from different materials (in the known heat exchangers mentioned, the heat exchanger block usually consists of a metal material such as for example an aluminium material and the collecting and/or distributor boxes or deflecting box usually consist of a plastic), the heat exchanger block and the collecting and/or distributor box or deflecting box are joined to one another by means of screws and not welded together. However, this considerably increases the space requirement for such a heat exchanger since the screws required here increase the external dimensions of the heat exchanger even beyond the dimensions of a heat exchanger formed with the usual clamping or flange connection. Furthermore, the screws increase the weight of the heat exchanger and the necessary material consumption. In addition, a seal is also required with this screw connection and there is the risk that this mechanical clamping connection between heat exchanger block and collecting and/or distributor boxes or deflecting box becomes leaky. The small surface contact zones resulting from the screw connections between the plastic of the heat exchanger block and the metal material of the collecting and/or distributor boxes or deflecting box can cause plastic deformation which result in a reduced sealing pressure.

However, heat exchangers are generally subjected to an alternating loading as a result of an alternating internal pressure and an alternating temperature loading so that under longer and higher stressing there is a risk that the heat exchanger will become leaky due to the reduced sealing pressure.

Against this background, it is therefore the object of the present invention to provide a heat exchanger and a method for producing a heat exchanger which avoids the afore-mentioned disadvantages.

This object is solved according to the invention by the subject matter of the independent claims 1 and 10. Advantageous embodiments are the subject matter of the dependent claims.

The present invention is based on the general idea of providing a heat exchanger without a clamping or flange connection in which a component made of a first material and a component made of a second material abut against one another in an overlapping manner in their edge zone and are joined to one another, characterized in that at least the edge zone of the first component consists of a material which is impermeable to laser beams and that the edge zone of the first component externally overlaps the edge zone of the second component and abuts against this in direct contact and is thus joined by a fusion bond.

Thus, a compact heat exchanger with small dimensions and reduced material required can be provided. The edge zone of the first component which externally overlaps the edge zone of the second component and abuts against this in direct contact can be joined to the edge zone of the second component by a fusion bond so that a secure, reliable, load-bearing and tight connection is provided between first component and second component. A clamping or flange connection between first component and second component with the construction-dependent high material requirement and space requirement as well as a required sealing is thus avoided. The connection between first component and second component is secure, reliable and tight even under longer and higher stressing of the heat exchanger so that the reliability and lifetime of the heat exchanger according to the invention is significantly increased. In particular, a compact heat exchanger in relation to capacity is therefore provided which can be adapted to the reduced installation space in modern motor vehicles.

According to a particularly advantageous embodiment, the edge zone of the second component can be plasticized to produce the fusion bond by means of a laser beam so that the edge zone of the second component is joined to an inner side of the edge zone of the first component which points towards the edge zone of the second component. According to the invention, the edge zone of the first component is heated by means of a laser beam with the result that the edge zone of the second component against which the edge zone of the first component abuts in direct contact is heated. Since the edge zone of the first component according to the invention consists at least in some regions of a material which is impermeable to laser beams, this heating by means of a laser beam and therefore the joining of the two component due to a fusion bond is possible by means of a laser beam. The laser beam does not pass through the material which is impermeable to laser beams, instead the material absorbs the energy of the laser beam and is heated as a result. This heating of the two different materials which abut against one another in direct contact brings about a secure, reliable and in particular tight joining of these two materials to one another.

A further advantageous embodiment provides that the laser beam acts on an outer side of the edge zone of the first component which points away from the edge zone of the second component. Thus, in a simple manner according to the invention, a laser beam can act on the edge zone of the first component and join the two components together in the manner described. The laser beam can in this case act on the entire edge zone of the first component or it can act on one or several subregions of the edge zone. It is also possible that a plurality of laser beams act on the entire edge zone of the first component or on one or more subregions of the edge zone. The laser beam or beams can in this case act at right angles to the edge zone or at an angle which differs from a right angle. It is also possible that during the action of a plurality of laser beam, these each act at different angles and/or act on different subregions, simultaneously or successively.

According to a further preferred embodiment, the edge zone of the second component has projections or lugs which embrace the edge zone of the first component at least in some regions. These projections or lugs act inter alia as guides so that on the one hand it is ensured according to the invention that the components come into the correct position with respect to one another when joining together and that on the other hand the edge zones of the first and second component abut against one another in direct contact so that the joining of the two components together according to the invention is made possible. Advantageously it can be provided here that the projections or lugs are continuations of reinforcing fins provided on the second component. This is particularly advantageous if the second component is subject to a high and possibly alternating internal pressure since an extension or inflation of the second component is then prevented.

Various design possibilities for the projections or lugs are feasible as long as it is ensured that in the mounted state they embrace the edge zone of the first component at least in sections.

The remaining parameters for the configuration of the projections or lugs can be adapted to the respective application. Here inter alia the number of projections or lugs, the spacing of the projections or lugs to one another, the width of the projections or lugs etc., are mentioned as relevant parameters.

A further preferred embodiment provides that the edge zone of the second component has at least one stop against which the edge zone of the first component abuts with one edge at least partially. By this means it is facilitated according to the invention that the first component and the second component lie with respect to one another in the correct position so that the edge zone of the first and second component are joined to one another in the provided position. This contributes according to the invention to a secure, load-bearing and tight connection between the first component and second component even under fairly long and higher stressing of the heat exchanger so that the reliability and lifetime of the heat exchanger according to the invention is significantly increased.

This is particularly advantageous if, as is provided according to a further preferred embodiment, the first component is a metal component and in particular a heat exchanger block made of aluminium. As a result of the formation of a surface contact between first component and second component at the stop of the second component, substantially only a tensile or compressive loading will occur in this region and no bending loading. This is particularly advantageous for aluminium since aluminium can absorb tensile and compressive forces better than a bending load.

Finally, according to a further advantageous embodiment it is provided that the second component is a non-metallic component, in particular a collecting and/or distributor or deflecting box.

As a result of this advantageous configuration according to the invention, in which an edge zone made of aluminium abuts against an edge zone made of plastic in direct contact, the plastic is joined to the aluminium side which points towards the plastic when a laser beam acts on the other aluminium side which points away from the plastic.

Further important features and advantages of the invention are obtained from the subclaims, from the drawings and from the relevant description of the figures with reference to the drawings.

It is understood that the features mentioned previously and to be explained further hereinafter can be used not only in the respectively given combination but also in other combinations or alone without departing from the scope of the present invention.

Preferred exemplary embodiments of the invention are presented in the drawings and are explained in detail in the following description, where the same reference numbers relate to the same or similar or functionally the same components.

In the figures, in each case schematically
- Fig. 1: shows a partial sectional view of a first embodiment of a heat exchanger (10) according to the invention with a first component (20) and a second component (60),
- Fig. 2: shows a partial sectional view of a second embodiment of a heat exchanger (10) according to the invention with a first component (20) and a second component (60),
- Fig. 3: shows an isometric partial sectional view of a third embodiment of a heat exchanger (10) according to the invention with a first component (20) and a second component (60),

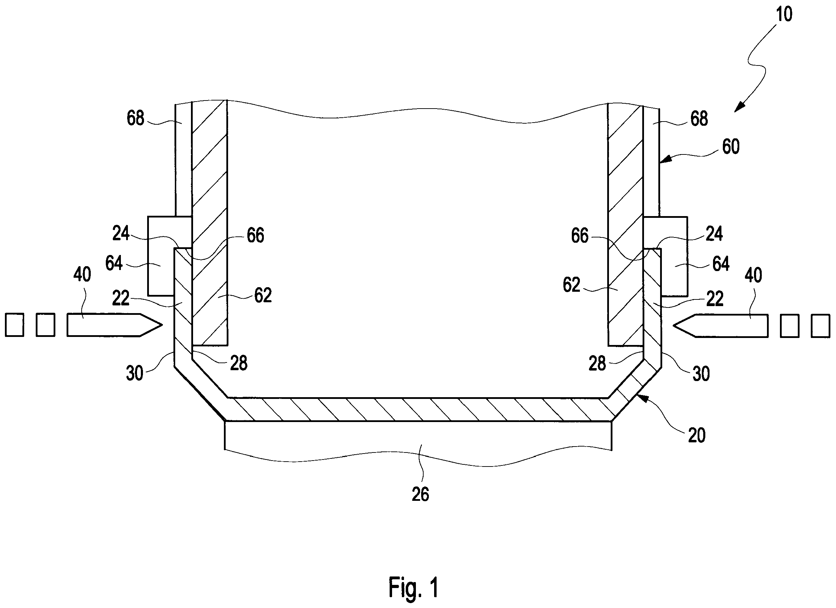

Figure 1 shows in a partial view a section of a first embodiment of a heat exchanger 10 according to the invention having a first component 20 and a second component 60. In the embodiment of the heat exchanger 10 according to the invention, the first component 20 is a heat exchanger block 20 which is advantageously formed of aluminium and the second component 60 is a collecting box 60 which is advantageously formed of plastic.

The heat exchanger block 20 has an upright edge zone 22 which is delimited by an edge 24. On the side pointing towards the edge zone 22 or the edge 24, fins 26 are arranged in a known manner, of which one is shown here.

As can be clearly seen here, the edge zone 22 abuts externally against an edge zone 62 of the collecting box 60 in direct contact in an overlapping manner. The edge zone 22 has on its outer side in each case a plurality of projections or lugs 64 which embrace the edge zone 22 of the first component 20. In each case, a stop 66 is formed on the inner side of the projections 64, against which the edge zone 22 abuts with its edge 24. It can also be clearly seen here that the projections or lugs 64 are continuations of reinforcing fins 68 arranged on the collecting box 60. This is advantageous since the collecting box 60 is exposed to a high and alternating internal pressure and these reinforcing fins 68 prevent an expansion or inflation of the collecting box 60.

The projections or lugs 64 act inter alia as guides so that on the one hand, it is ensured according to the invention that the heat exchanger block 20 and the collecting box 60 come into the correct position with respect to one another when joining together and that on the other hand, the edge zones 22, 62 of the heat exchanger block 20 and the collecting box 60 abut against one another in direct contact so that it is possible to join the two components together according to the invention.

This contributes according to the invention to a secure, load-bearing and tight connection between heat exchanger block 20 and collecting box 60 even under fairly long and higher stressing of the heat exchanger 10, so that the reliability and lifetime of the heat exchanger 10 according to the invention is significantly increased.

As indicated by the arrows 40 here in Fig. 1, a laser beam 40 acts in each case on an outer side 30 of the edge zone 22 of the heat exchanger block 20. By this means the material of the edge zone 22, which is impermeable to laser beams, is heated which, in the exemplary embodiment presented here, is aluminium. The edge zone 62 of the collecting box 60 formed from a plastic abuts in direct contact against an inner side 28 of the edge zone 22 and is therefore also heated. This results in a reliable, secure and in particular direct connection between the plastic of the edge zone 22 of the heat exchanger block 20 in the region heated by the laser beam 40.

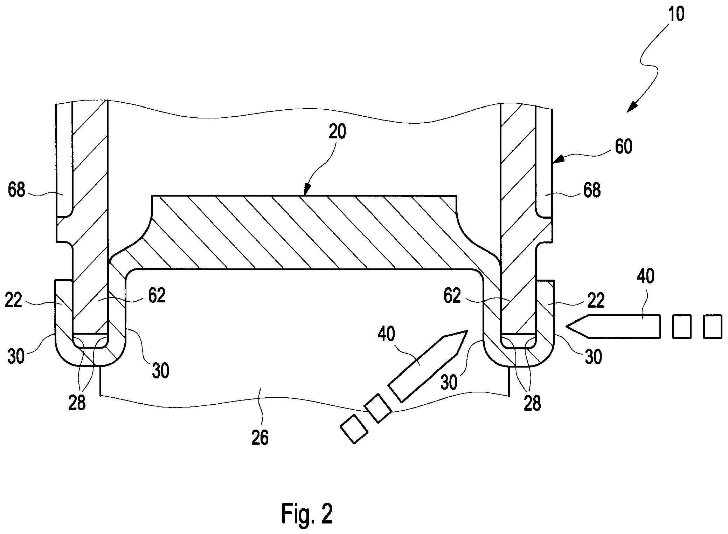

Figure 2 shows in a partial view a section of a second embodiment of a heat exchanger 10 according to the invention having a first component 20 and a second component 60. In the embodiment of a heat exchanger 10 according to the invention shown here, the first component 20 is a heat exchanger block 20 which is advantageously formed of aluminium and the second component 60 is a collecting box 60 which is advantageously formed of plastic.

The same components are here provided with the same reference numbers so that a renewed description of these components can be dispensed with.

Also here in the embodiment shown in Fig. 2, the edge zone 22 of the heat exchanger block 20 and the edge zone 62 of the collecting box 60 abut against one another in direct contact in an overlapping manner. Unlike the embodiment shown in Fig. 1, the edge zone 22 of the heat exchanger block 20 however embraces the edge zone 62 of the collecting box 60 on both sides so that the inner side 28 of the edge zone 22 abuts directly against the two sides of the edge zone 62. Or in other words, the edge zone 22 of the heat exchanger block 20 forms a pocket in which the edge zone 62 of the collecting box 60 is introduced to make the connection. This ensures a secure and reliable positioning of the heat exchanger block 20 and collecting box 60 with respect to one another and therefore a secure, reliable and in particular tight connection between heat exchanger block 20 and collecting box 60.

The advantage of this embodiment consists in that the edge zone 62 of the collecting box 60 is connected sealingly on both sides to the inner side 28 of the edge zone 22 of the heat exchanger block 20. As indicated by the arrow 40, a laser beam 40 can as a result act on different regions of the outer side 30 of the edge zone 22 in each case: a laser beam 40 can act on the subregion of the outer side 30 of the edge zone 22 which lies opposite the outer side of the edge zone 62 of the collecting chamber 60 and a laser beam 40 can act on the subregion of the outer side 30 of the edge zone 22 which lies opposite the inner side of the edge zone 62 of the collecting chamber 60. By this means, a particularly secure and reliable and in particular double-sealing connection between the plastic of the edge zone 62 of the collecting chamber 60 and the aluminium of the edge zone 22 of the heat exchanger block 20 can be provided.

As a result of this configuration according to the invention, the laser beams 40 can act on subregions of the outer side 30 of the edge zone 22 which lie opposite both the outer side and also the inner side of the edge zone 62 of the collecting box 60 and therefore heat this region of the edge zone 22 in the manner already described. Thus however, both the outer side and the inner side of the edge zone 62 of the collecting chamber 60 which abut against the heated regions of the edge zone 22 in direct contact are heated so that a reliable, secure and in particular tight connection is achieved between the plastic of the edge zone 62 of the collecting box 60 and the aluminium of the edge zone 22 of the heat exchanger block 20 in the regions heated by the laser beams 40.

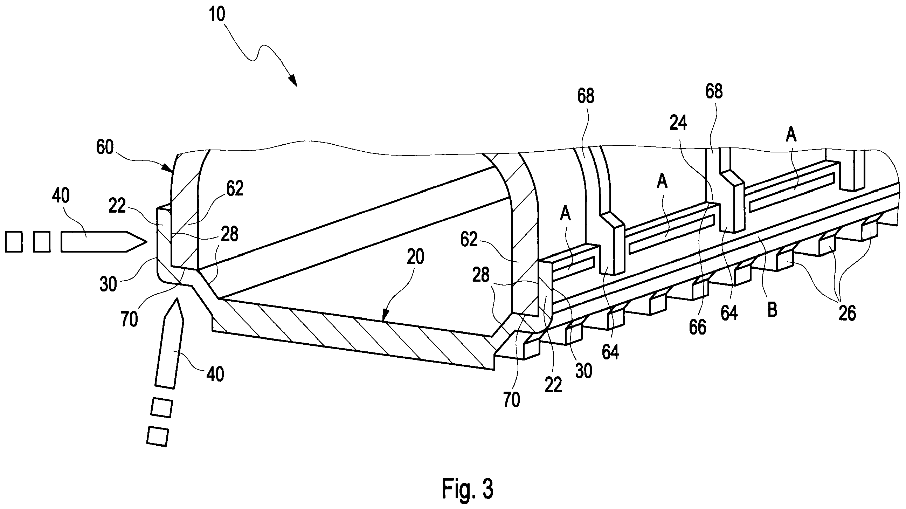

Figure 3 shows in a slightly perspective partial sectional view a third embodiment of a heat exchanger 10 according to the invention having a first component 20 and a second component 60. In the third embodiment of a heat exchanger 10 according to the invention shown here, the first component 20 is a heat exchanger block 20 which is advantageously formed of aluminium and the second component 60 is a collecting box 60 which is advantageously formed of plastic.

The same components are here provided with the same reference numbers so that a renewed description of these components can be dispensed with.

In this isometric view through the collecting box 60 and the heat exchanger block 20 of this third embodiment, it can be clearly seen that the edge zone 22 of the heat exchanger block 20 and the edge zone 62 of the collecting box 60 abut against one another in direct contact in an overlapping manner. In addition, the edge zone 22 of the heat exchanger block 20 is bent around the edge zone 62 of the collecting box 60 in such a manner that both the outer side of the edge zone 62 and also an edge 70 of the edge zone 62 abut sealingly against the inner side 28 of the edge zone 22.

The advantage of this embodiment is that the edge zone 62 of the collecting box 60 is joined sealingly both with its outer side and also with its edge 70 to the inner side 28 of the edge zone 22 of the heat exchanger block 20. As indicated by the arrows 40, a laser beam 40 can thus act in each case on different regions of the outer side 30 of the edge zone 22: a laser beam 40 can act on the subregion of the outer side 30 of the edge zone 22 which lies opposite the outer side of the edge zone 62 of the collecting chamber 60 and a laser beam 40 can act in Fig. 3 from below onto the subregion of the outer side 30 of the edge zone 22 which lies opposite the edge 70 of the edge zone 62 of the collecting chamber 60. By this means, a particularly secure and reliable and in particular double-sealing connection can be provided between the plastic of the edge zone 62 of the collecting box 60 and the aluminium of the edge zone 22 of the heat exchanger block 20.

An advantage of this embodiment consists in that laser beams 40 can act on different laser regions A, B on the outer side 30 of the edge zone 22 of the heat exchanger block 20 in order, for example, to achieve a triple join or seal between the edge zone 62 of the collecting box 60 and the edge zone 22 of the heat exchanger block 20.

As already described, a laser beam 40 can act from below in Fig. 3 onto the subregion of the outer side 30 of the edge zone 22 which lies opposite the edge 70 of the edge zone 62 of the collecting box 60.This ensures a secure and reliable and in particular sealing first connection between the edge 70 of the edge zone 62 and the inner side 28 of the edge zone 22 in the manner described according to the invention.

Furthermore, a laser beam 40 can act on a laser region B on the outer side 30 of the edge zone 22 which lies opposite the outer side of the edge zone 62 of the collecting box 60 and is formed continuously along the outer side 30 of the edge zone 22. By this means a secure and reliable and in particular sealing second connection is achieved between the outer side of the edge zone 62 and the inner side 28 of the edge zone 22 in the manner described according to the invention.

Finally a laser beam 40 can act on a laser region A on the outer side 30 of the edge zone 22 which lies opposite the outer side of the edge zone 62 of the collecting box 60 and is formed intermittently along the outer side 30 of the edge zone 22 in each case between the projections or lugs 64. By this means a secure and reliable and in particular sealing third connection is achieved between the outer side of the edge zone 62 and the inner side 28 of the edge zone 22 in the manner described according to the invention.

## Claims

1. A heat exchanger comprising a first component (20) made of a first material and a second component (60) made of a second material, wherein the first and the second component (20, 60) each have an edge zone (22, 62) and wherein the first and the second component (20, 60) abut against one another in an overlapping manner at their edge zone (22, 62) and are joined together, **characterized in that**
at least the edge zone (22) of the first component (20) consists of a material which is impermeable to laser beams (40) and that the edge zone (22) of the first component (20) externally overlaps the edge zone (62) of the second component (60) and abuts against this in direct contact and is thus joined by a fusion bond.

2. The heat exchanger according to claim 1, **characterized in that** the edge zone (62) of the second component (60) can be plasticized to produce the fusion bond by means of a laser beam (40) so that the edge zone (62) of the second component (60) is joined to an inner side (28) of the edge zone (22) of the first component (20) which points towards the edge zone (62) of the second component (60).

3. The heat exchanger according to claim 2, **characterized in that** the laser beam (40) acts on an outer side (30) of the edge zone (22) of the first component (20) which points away from the edge zone (62) of the second component (60).

4. The heat exchanger according to any one of the preceding claims, **characterized in that** the edge zone (62) of the second component (60) has projections (64) which embrace the edge zone (22) of the first component (20) at least in some regions.

5. The heat exchanger according to any one of the preceding claims, **characterized in that** the edge zone (62) of the second component (60) has at least one stop (66) against which the edge zone (22) of the first component (20) abuts with one edge (24) at least partially.

6. The heat exchanger according to any one of the preceding claims, **characterized in that** the first component (20) is a metal component and in particular a component (20) made of aluminium.

7. The heat exchanger according to any one of the preceding claims, **characterized in that** the first component (20) is a heat exchanger block.

8. The heat exchanger according to any one of the preceding claims, **characterized in that** the second component (60) is a non-metallic component (60) and in particular is a component (60) made of plastic.

9. The heat exchanger according to any one of the preceding claims, **characterized in that** the second component (60) is a collecting and/or distributor or deflecting box.

10. A method for producing a heat exchanger according to claim 1 having a first component (20) made of a first material and a second component (60) made of a second material, wherein the first component (20) has a first edge zone (22) and the second component (60) has a second edge zone (62) and wherein the first edge zone (22) externally overlaps the second edge zone (62) and abuts against this in direct contact,
**characterized in that**
the first edge zone (22) is heated, that the heated first edge zone (22) heats the second edge zone (62) and that the first edge zone (22) and the second edge zone (62) are joined to one another in a sealing manner by the heating.

11. The method according to claim 10, **characterized in that** the first edge zone (22) is heated by means of a laser beam (40).

12. The method according to claim 10 or 11, **characterized in that** the first and second material are matched to one another so that only the second edge zone (22) is plasticized by the heating and joins to the first edge zone (62).

## Patentansprüche

1. Wärmetauscher, umfassend eine erste Komponente (20) aus einem ersten Material und eine zweite Komponente (60) aus einem zweiten Material, wobei die erste und die zweite Komponente (20, 60) jeweils eine Randzone (22, 62) aufweisen und wobei die erste und die zweite Komponente (20, 60) an ihrer Randzone (22, 62) überlappend aneinander anliegen und zusammengefügt sind, **dadurch gekennzeichnet, dass**
mindestens die Randzone (22) der ersten Komponente (20) aus einem Material besteht, das für Laserstrahlen (40) undurchlässig ist, und die Randzone (22) der ersten Komponente (20) die Randzone (62) der zweiten Komponente (60) außen überlappt und in direktem Kontakt daran anliegt und somit durch eine Schmelzbindung damit zusammengefügt ist.

2. Wärmetauscher nach Anspruch 1, **dadurch gekennzeichnet, dass** die Randzone (62) der zweiten Komponente (60) plastifiziert werden kann, um mittels eines Laserstrahls (40) die Schmelzbindung herzustellen, so dass die Randzone (62) der zweiten Komponente (60) mit einer Innenseite (28) der Randzone (22) der ersten Komponente (20) zusammengefügt ist, die zur Randzone (62) der zweiten Komponente (60) weist.

3. Wärmetauscher nach Anspruch 2, **dadurch gekennzeichnet, dass** der Laserstrahl (40) auf eine Außenseite (30) der Randzone (22) der ersten Komponente (20) wirkt, die von der Randzone (62) der zweiten Komponente (60) weg weist.

4. Wärmetauscher nach einem der vorstehenden Ansprüche, **dadurch gekennzeichnet, dass** die Randzone (62) der zweiten Komponente (60) Vorsprünge (64) aufweist, welche die Randzone (22) der ersten Komponente (20) mindestens in einigen Regionen umschließen.

5. Wärmetauscher nach einem der vorstehenden Ansprüche, **dadurch gekennzeichnet, dass** die Randzone (62) der zweiten Komponente (60) mindestens einen Anschlag (66) aufweist, gegen den die Randzone (22) der ersten Komponente (20) mindestens teilweise mit einem Rand (24) anliegt.

6. Wärmetauscher nach einem der vorstehenden Ansprüche, **dadurch gekennzeichnet, dass** die erste Komponente (20) eine Metallkomponente und insbesondere eine Komponente (20) aus Aluminium ist.

7. Wärmetauscher nach einem der vorstehenden Ansprüche, **dadurch gekennzeichnet, dass** die erste Komponente (20) ein Wärmetauscherblock ist.

8. Wärmetauscher nach einem der vorstehenden Ansprüche, **dadurch gekennzeichnet, dass** die zweite Komponente (60) eine Nicht-Metallkomponente (60) und insbesondere eine Komponente (60) aus Kunststoff ist.

9. Wärmetauscher nach einem der vorstehenden Ansprüche, **dadurch gekennzeichnet, dass** die zweite Komponente (60) ein Sammel- und/oder Verteiler- oder Ablenkkasten ist.

10. Verfahren zur Herstellung eines Wärmetauschers nach Anspruch 1, aufweisend eine erste Komponente (20) aus einem ersten Material und eine zweite Komponente (60) aus einem zweiten Material, wobei die erste Komponente (20) eine erste Randzone (22) aufweist und die zweite Komponente (60) eine zweite Randzone (62) aufweist und wobei die erste Randzone (22) die zweite Randzone (62) äußerlich überlappt und in direktem Kontakt daran anliegt,
**dadurch gekennzeichnet ist, dass**
die erste Randzone (22) erwärmt wird, so dass die erwärmte erste Randzone (22) die zweite Randzone (62) erwärmt und dadurch, dass die erste Randzone (22) und die zweite Randzone (62) auf abdichtende Art durch Erwärmen zusammengefügt sind.

11. Verfahren nach Anspruch 10, **dadurch gekennzeichnet, dass** die erste Randzone (22) mittels eines Laserstrahls (40) erwärmt wird.

12. Verfahren nach Anspruch 10 oder 11, **dadurch gekennzeichnet, dass** das erste und das zweite Material so aufeinander abgestimmt sind, dass nur die zweite Randzone (22) plastifiziert wird und durch Erwärmen mit der ersten Randzone (62) zusammengefügt ist.

## Revendications

1. Échangeur de chaleur comprenant un premier composant (20) réalisé en un premier matériau et un deuxième composant (60) réalisé en un deuxième matériau, dans lequel le premier et le deuxième composant (20, 60) ont chacun une zone de bord (22, 62) et dans lequel le premier et le deuxième composant (20, 60) viennent en butée l'un contre l'autre de manière à se chevaucher au niveau de leur zone de bord (22, 62) et sont assemblés l'un à l'autre, **caractérisé en ce que**
au moins la zone de bord (22) du premier composant (20) est constituée d'un matériau qui est imperméable aux faisceaux laser (40) et que la zone de bord (22) du premier composant (20) chevauche à l'extérieur la zone de bord (62) du deuxième composant (60) et vient en butée contre celle-ci en contact direct et est ainsi assemblée par une liaison de fusion.

2. Échangeur de chaleur selon la revendication 1, **caractérisé en ce que** la zone de bord (62) du deuxième composant (60) peut être plastifiée pour produire la liaison de fusion au moyen d'un faisceau laser (40) de sorte que la zone de bord (62) du deuxième composant (60) est assemblée à un côté intérieur (28) de la zone de bord (22) du premier composant (20) qui pointe vers la zone de bord (62) du deuxième composant (60).

3. Échangeur de chaleur selon la revendication 2, **caractérisé en ce que** le faisceau laser (40) agit sur un côté extérieur (30) de la zone de bord (22) du premier composant (20) qui pointe à l'opposé de la zone de bord (62) du deuxième composant (60).

4. Échangeur de chaleur selon l'une quelconque des revendications précédentes, **caractérisé en ce que** la zone de bord (62) du deuxième composant (60) a des saillies (64) qui embrassent la zone de bord (22) du premier composant (20) au moins dans certaines régions.

5. Échangeur de chaleur selon l'une quelconque des revendications précédentes, **caractérisé en ce que** la zone de bord (62) du deuxième composant (60) a au moins une butée (66) contre laquelle la zone de bord (22) du premier composant (20) vient en butée avec un bord (24) au moins partiellement.

6. Échangeur de chaleur selon l'une quelconque des revendications précédentes, **caractérisé en ce que** le premier composant (20) est un composant métallique et en particulier un composant (20) en aluminium.

7. Échangeur de chaleur selon l'une quelconque des revendications précédentes, **caractérisé en ce que** le premier composant (20) est un bloc échangeur de chaleur.

8. Échangeur de chaleur selon l'une quelconque des revendications précédentes, **caractérisé en ce que** le deuxième composant (60) est un composant (60) non-métallique et en particulier est un composant (60) en plastique.

9. Échangeur de chaleur selon l'une quelconque des revendications précédentes, **caractérisé en ce que** le deuxième composant (60) est une boîte de collecte et/ou de distribution ou de déflexion.

10. Procédé de production d'un échangeur de chaleur selon la revendication 1 ayant un premier composant (20) réalisé en un premier matériau et un deuxième composant (60) réalisé en un deuxième matériau, dans lequel le premier composant (20) a une première zone de bord (22) et le deuxième composant (60) a une deuxième zone de bord (62) et dans lequel la première zone de bord (22) chevauche à l'extérieur la deuxième zone de bord (62) et vient en butée contre celle-ci en contact direct,
**caractérisé en ce que**
la première zone de bord (22) est chauffée, que la première zone de bord (22) chauffée chauffe la deuxième zone de bord (62) et que la première zone de bord (22) et la deuxième zone de bord (62) sont assemblées l'une à l'autre de manière étanche par chauffage.

11. Procédé selon la revendication 10, **caractérisé en ce que** la première zone de bord (22) est chauffée au moyen d'un faisceau laser (40).

12. Procédé selon la revendication 10 ou 11, **caractérisé en ce que** le premier et deuxième matériau sont adaptés l'un à l'autre de sorte que seule la deuxième zone de bord (22) est plastifiée par le chauffage et s'assemble à la première zone de bord (62).
